# DEMANDE DE BREVET EUROPEEN

(11) **EP 1 550 974 A1**
(43) Date de publication de la demande: **06.07.2005**
(21) Numéro de dépôt: 04293109.7
(22) Date de dépôt: 23.12.2004
(51) Int. Cl.: G06F 17/60

(54) **Système, procédé et module logiciel de gestion de ressources dans un environnement délimité**

(30) Priorité: 29.12.2003 FR 0315529
(71) Demandeur: FRANCE TELECOM, 75015 Paris (FR)
(72) Inventeur: Lamouret, Serge, 94270 Le Kremlin Bicetre (FR); Douani, Damien, 92130 Issy Les Moulineaux (FR); Batton, Delphine, 92150 Suresnes (FR)
(74) Mandataire: Remy, Vincent Noel Paul

(57) **Abrégé**

Le système (10) de gestion de ressources comporte des moyens (21) de modélisation de la présence, de la disponibilité et/ou de l'utilisation de ces ressources dans un environnement (12) sous forme de fonctions d'une variable temporelle. Il comporte en outre :
- des moyens (21) de modélisation de la présence et/ou de la disponibilité d'utilisateurs (22) des ressources sous forme de fonctions d'une variable temporelle,
- des moyens (24) de prédiction recevant en entrée les valeurs passées des fonctions de modélisation des ressources et les valeurs des fonctions de modélisation des utilisateurs (22), et fournissant en sortie des valeurs prédites des fonctions de modélisation des ressources, et
- des moyens (32) d'optimisation de la gestion des ressources en fonction des valeurs prédites fournies par les moyens de prédiction (24).

## Description

La présente invention concerne un système, un procédé et un module logiciel de gestion de ressources dans un environnement délimité.

On connaît déjà dans l'état de la technique un système de gestion de ressources dans un environnement délimité comportant des moyens de modélisation de la présence, de la disponibilité et/ou de l'utilisation de ces ressources dans l'environnement sous forme de fonctions d'une variable temporelle.

Un tel système de gestion de ressources est généralement utilisé dans le cadre d'une entreprise, auquel cas il peut aider à la gestion des stocks de matériel de cette entreprise, par exemple en effectuant des mises à jour automatiques de listes de matériel.

Ces mises à jour automatiques prennent en compte les entrées et sorties de matériel, formant les ressources, dans les locaux de l'entreprise, formant l'environnement délimité. Les entrées et sorties de ressources sont comptabilisées grâce aux moyens de modélisation de présence de ces ressources.

Les moyens de modélisation de disponibilité et de l'utilisation des ressources permettent notamment d'observer l'utilisation faite des ressources, et ainsi aider aux décisions d'approvisionnement en ressources devant être ou non renouvelées.

Cependant, les moyens de modélisation ne fournissent que des informations sur l'état des ressources, les décisions d'approvisionnement étant laissées au jugement des utilisateurs du système de gestion.

L'invention a notamment pour but d'améliorer l'assistance apportée aux utilisateurs en fournissant un système de gestion de ressources susceptible de proposer des décisions d'approvisionnement à la place des utilisateurs.

A cet effet, l'invention a pour objet un système de gestion de ressources dans un environnement délimité comportant des moyens de modélisation de la présence, de la disponibilité et/ou de l'utilisation de ces ressources dans l'environnement sous forme de fonctions d'une variable temporelle, caractérisé en ce qu'il comporte en outre :
- des moyens de modélisation de la présence et/ou de la disponibilité d'utilisateurs des ressources sous forme de fonctions d'une variable temporelle,
- des moyens de prédiction recevant en entrée les valeurs passées des fonctions de modélisation des ressources et les valeurs des fonctions de modélisation des utilisateurs, et fournissant en sortie des valeurs prédites des fonctions de modélisation des ressources, et
- des moyens d'optimisation de la gestion des ressources en fonction des valeurs prédites fournies par les moyens de prédiction.

Les moyens de prédiction permettent de prévoir les variations temporelles des fonctions modélisant la présence, la disponibilité et/ou l'utilisation des ressources, afin de rendre automatiquement possible la prédiction des futurs besoins éventuels en ressources à un instant quelconque.

Les moyens d'optimisation utilisent ensuite les prévisions obtenues par les moyens de prédiction, éventuellement en combinaison avec divers autres critères, afin de déterminer les moments les plus adéquats pour le renouvellement des ressources.

Le système de gestion selon l'invention ne nécessite donc pas d'intervention humaine pour proposer des décisions d'approvisionnement.

Suivant d'autres caractéristiques optionnelles de l'invention :
- les moyens de prédictions comportent un réseau de neurones ;
- les moyens de prédiction comportent des moyens de calcul de corrélations entre les fonctions de modélisation qui leur sont fournies ;
- les moyens de prédiction comportent des moyens de sélection d'une partie des fonctions de modélisation des ressources selon un critère de prédictibilité de ces fonctions ;
- les moyens de prédiction comportent des moyens d'estimation d'un critère de fiabilité des fonctions de modélisation des utilisateurs en fonction d'une fréquence de modification des valeurs de ces fonctions par les utilisateurs correspondants ;
- les moyens d'optimisation comportent des moyens de génération automatique de commandes d'achat et/ou de remplacement des ressources ; et
- le système de gestion comporte des moyens de déclenchement d'une alerte en cas de conflit sur l'utilisation d'une ressource.

L'invention concerne en outre un procédé de gestion de ressources dans un environnement délimité comportant la modélisation de la présence, de la disponibilité et/ou de l'utilisation de ces ressources dans l'environnement sous forme de fonctions d'une variable temporelle, caractérisé en ce qu'il comporte en outre les étapes suivantes :
- on modélise la présence et/ou la disponibilité d'utilisateurs des ressources sous forme de fonctions d'une variable temporelle,
- on fournit à des moyens de prédiction les valeurs passées des fonctions de modélisation des ressources et les valeurs des fonctions de modélisation des utilisateurs pour obtenir en sortie des valeurs prédites des fonctions de modélisation des ressources, et
- on optimise la gestion des ressources en fonction des valeurs prédites fournies par les moyens de prédiction.

De manière optionnelle, lors de l'étape d'optimisation, on calcule des instants de renouvellement des ressources, notamment en fonction de contraintes prédéfinies.

L'invention concerne également un module logiciel de gestion de ressources dans un environnement délimité, comportant des instructions logicielles pour modéliser la présence, la disponibilité et/ou l'utilisation de ces ressources dans l'environnement sous forme de fonctions d'une variable temporelle, caractérisé en ce qu'il comporte en outre des instructions logicielles pour :
- modéliser la présence et/ou la disponibilité d'utilisateurs des ressources sous forme de fonctions d'une variable temporelle,
- fournir à des moyens de prédiction les valeurs passées des fonctions de modélisation des ressources et les valeurs des fonctions de modélisation des utilisateurs pour obtenir en sortie des valeurs prédites des fonctions de modélisation des ressources, et
- optimiser la gestion des ressources en fonction des valeurs prédites fournies par les moyens de prédiction.

L'invention sera mieux comprise à la lecture de la description qui va suivre, donnée uniquement à titre d'exemple et faite en se référant aux dessins annexés dans lesquels :
- la figure 1 représente schématiquement un système de gestion de ressources selon l'invention ;
- la figure 2 représente schématiquement un procédé de gestion de ressources selon l'invention.

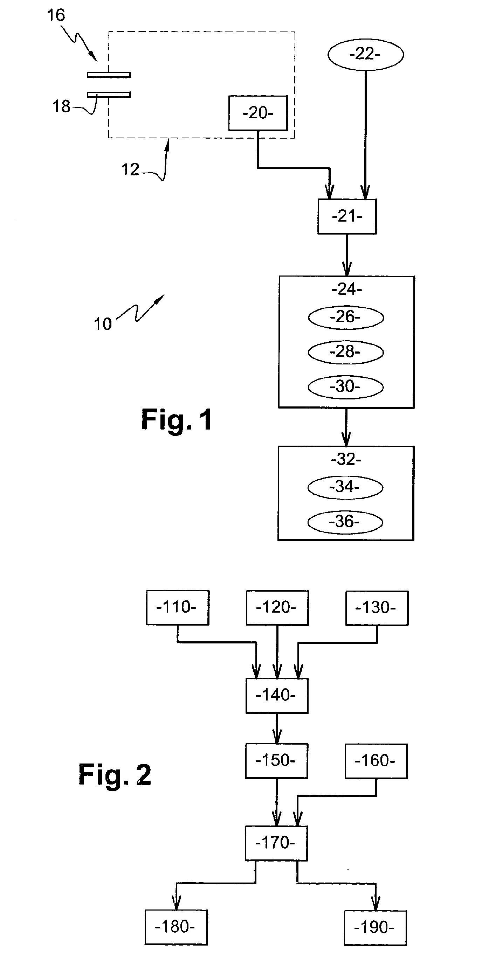

On a représenté sur la figure 1 un système de gestion de ressources, désigné par la référence générale 10, destiné à gérer des ressources dans un environnement délimité 12.

Afin de modéliser la présence des ressources dans l'environnement 12, celui-ci est muni de moyens 16 de détection des ressources. Ces ressources sont munies d'identifiants uniques, par exemple des étiquettes électroniques, participant à la détection de ces ressources.

On prévoit parmi les moyens de détection 16 des portails 18 en entrée et en sortie de l'environnement 12 en tant que moyens de détection des entrées ou sorties des ressources dans l'environnement 12.

On notera qu'il est possible de découper l'environnement 12 en une pluralité de zones délimitées, chacune munie de portails d'entrée et de sortie, cela dans le but de préciser une localisation des ressources dans l'environnement 12.

Lors de l'entrée ou de la sortie d'une ressource de l'environnement 12, ou d'une zone délimitée précitée, le portail 18 détecte l'identifiant de cette ressource.

Une base de données 20, comportant des informations concernant les ressources, est alors mise à jour. Cette base de données 20 comporte par exemple une liste des ressources référencées, des informations sur la présence ou l'absence de ces ressources dans l'environnement 12, des informations sur des stocks de ressources disponibles, ainsi qu'un historique retraçant l'évolution des stocks de ressources.

On notera que dans le cas de ressources consommables, comme par exemple des rames de papier, la base de donnée est mise à jour à chaque utilisation de ces ressources.

Dans certains cas, la base de données 20 peut comporter en outre des données concernant la disponibilité ou l'utilisation de certaines ressources, ceci dans un objectif de gestion des ressources collectives.

Le système de gestion 10 comporte en outre des moyens 21 de modélisation de la présence, de la disponibilité et/ou de l'utilisation des ressources dans l'environnement 12.

Les moyens de modélisation 21 convertissent toutes les données qui lui ont été fournies sous forme de fonctions d'une variable temporelle, chaque fonction décrivant l'évolution d'une de ces données au cours du temps.

Ces données fournies sont notamment les informations stockées dans la base de données 20.

En outre, d'autres données pouvant influer sur la gestion des ressources, par exemple des données concernant des utilisateurs 22 des ressources, sont fournies aux moyens de modélisation 21. Par exemple, on peut fournir les agendas de ces utilisateurs, permettant de prévoir leurs besoins concernant les ressources, ces besoins dépendant de leurs présences ou absences, de leurs types de tâches effectuées, etc.

Les moyens de modélisation 21 convertissent de même ces données concernant les utilisateurs sous forme de fonctions d'une variable temporelle, chaque fonction décrivant l'évolution d'une de ces données au cours du temps.

Le système de gestion 10 comporte ensuite des moyens de prédiction 24, susceptibles de prévoir l'évolution des fonctions de modélisation des ressources.

Dans certains cas, les moyens de prédiction 24 comportent un réseau de neurones.

De façon alternative, les moyens de prédiction 24 comportent des moyens de calcul, notamment des moyens 26 de calcul de corrélation entre les fonctions de modélisation qui leurs sont fournies, permettant une estimation de valeurs prédites pour ces fonctions.

Les moyens de calcul comportent en outre des moyens 28 de sélection d'une partie des fonctions de modélisation des ressources selon un critère de prédictibilité de ces fonctions. Ainsi, les fonctions les plus aisément prédictibles sont prises en compte en priorité.

Enfin, les moyens de calcul comportent des moyens 30 d'estimation d'un critère de fiabilité des fonctions de modélisation des utilisateurs en fonction d'une fréquence de modification des valeurs de ces fonctions par les utilisateurs correspondants. Ainsi, par exemple dans le cas où les fonctions correspondant aux utilisateurs proviennent d'agendas, une forte fréquence de modifications d'un agenda implique le fait que cet agenda risque d'être encore de nombreuses fois modifié, et donc que les informations qu'il contient ne peuvent pas servir pour une prédiction entièrement fiable. Les fonctions considérées comme étant les moins fiables ne sont en conséquence pas traitées en priorité.

Le système de gestion 10 comporte enfin des moyens 32 d'optimisation de la gestion des ressources en fonction des valeurs prédites fournies par les moyens de prédiction 24. Ces moyens d'optimisation 32 comportent notamment des moyens 34 de génération automatique de commandes d'achat et/ou de remplacement des ressources, ainsi que des moyens de déclenchement d'une alerte 36 en cas de conflit sur l'utilisation d'une ressource.

On notera que, dans un mode de réalisation préféré de l'invention, le système 10 comporte un module logiciel comprenant les moyens de modélisation 21, les moyens de prédiction 24 et les moyens d'optimisation 32.

Dans ce cas, le module logiciel comporte des instructions logicielles pour modéliser la présence, la disponibilité et/ou l'utilisation des ressources dans l'environnement 12 sous forme de fonctions d'une variable temporelle. Le module logiciel comporte également des instructions logicielles pour :
- modéliser la présence et/ou la disponibilité d'utilisateurs des ressources sous forme de fonctions d'une variable temporelle.
- fournir à des moyens de prédiction les valeurs passées des fonctions de modélisation des ressources et les valeurs des fonctions de modélisation des utilisateurs pour obtenir en sortie des valeurs prédites des fonctions de modélisation des ressources, et
- optimiser la gestion des ressources en fonction des valeurs prédites fournies par les moyens de prédiction.

Le fonctionnement du système de gestion 10 sera expliqué en référence à la figure 2, représentant un procédé de gestion de ressources utilisant le système de gestion de ressources 10.

Au cours de trois premières étapes 110, 120 et 130, on récolte des données utiles au procédé de gestion de ressources.

L'étape 110 concerne la récupération des données comprises dans la base de données 20.

L'étape 120 concerne la récupération de données correspondant à la détection d'événements particuliers, comme par exemple l'entrée ou la sortie de ressources, la destruction de ressources ou autre. Cette étape implique une mise à jour de la base 20.

L'étape 130 correspond à la récupération de données concernant les utilisateurs 22 des ressources de l'environnement 12. Ces données comportent par exemple la fourniture de leurs agendas.

Toutes ces données récoltées sont fournies aux moyens de modélisation 21 qui, au cours d'une étape 140, modélisent les données récupérées sous forme de fonctions d'une variable temporelle, décrivant l'évolution de ces données au cours du temps.

Ces fonctions de modélisation sont fournies aux moyens de prédictions 24 qui les exploitent au cours d'une étape 150 afin d'obtenir en sortie des valeurs prédites des fonctions de modélisation des ressources. Pour cela, les moyens de prédiction 24 peuvent notamment prendre en compte des récurrences des fonctions temporelles, des corrélations entre les différentes fonctions, ainsi que la fiabilité de certaines de ces fonctions, comme cela a été décrit précédemment.

Les données prédites sont ensuite fournies aux moyens d'optimisation 32, qui les analysent lors d'une étape 170, de manière à prévoir de manière optimale l'utilisation et la consommation des ressources.

D'autres données, récoltées au cours d'une étape 160, sont de même fournies aux moyens d'optimisation 32. Ces données concernent des contraintes qui devront être prises en compte lors des calculs d'optimisation, ces contraintes concernant par exemple des délais de livraison de ressources en cas de renouvellement.

Suite aux étapes 150 et 160, lors de l'étape 170, les moyens 32 d'optimisation des ressources analysent les données reçues dans le but de fournir des propositions pour optimiser l'utilisation des ressources, notamment des propositions optimales de renouvellement des ressources. Par exemple, en cas de suremploi d'une ressource, les moyens d'optimisation proposeront l'acquisition de nouvelles ressources du même type.

Dans ce but, Les moyens 32 d'optimisation analysent notamment diverses priorités, suivant, par exemple, les coûts, performances ou autres critères de telle ou telle proposition de renouvellement des ressources.

Les moyens 34 de génération automatique de commande d'achat et/ou de remplacement des ressources sont mis en oeuvre au cours d'une étape 180, lorsque les moyens d'optimisation 32 ont déterminé le moment le plus adéquat pour le renouvellement des ressources.

Les moyens d'optimisation 32 permettent aussi une gestion de problèmes liés aux ressources. Ainsi, en cas de problème, les moyens 36 de déclenchement d'alerte génèrent un message d'alerte au cours d'une étape 190, par exemple en cas de conflit sur l'utilisation d'une ressource.

On notera que l'invention n'est pas limitée au mode de réalisation précédemment décrit.

En effet, en variante, un système de gestion selon l'invention peut aussi être utilisé pour gérer des ressources logicielles dans un environnement virtuel.

## Revendications

1. Système (10) de gestion de ressources dans un environnement délimité (12) comportant des moyens (21) de modélisation de la présence, de la disponibilité et/ou de l'utilisation de ces ressources dans l'environnement (12) sous forme de fonctions d'une variable temporelle, **caractérisé en ce qu'**il comporte en outre :
- des moyens (21) de modélisation de la présence et/ou de la disponibilité d'utilisateurs (22) des ressources sous forme de fonctions d'une variable temporelle,
- des moyens (24) de prédiction recevant en entrée les valeurs passées des fonctions de modélisation des ressources et les valeurs des fonctions de modélisation des utilisateurs (22), et fournissant en sortie des valeurs prédites des fonctions de modélisation des ressources, et
- des moyens (32) d'optimisation de la gestion des ressources en fonction des valeurs prédites fournies par les moyens de prédiction (24).

2. Système (10) de gestion de ressources selon la revendication 1, dans lequel les moyens de prédictions (24) comportent un réseau de neurones.

3. Système (10) de gestion de ressources selon la revendication 1, dans lequel les moyens de prédiction (24) comportent des moyens (26) de calcul de corrélations entre les fonctions de modélisation qui leur sont fournies.

4. Système (10) de gestion de ressources selon la revendication 3, dans lequel les moyens de prédiction (24) comportent des moyens (28) de sélection d'une partie des fonctions de modélisation des ressources selon un critère de prédictibilité de ces fonctions.

5. Système (10) de gestion de ressources selon la revendication 3 ou 4, dans lequel les moyens de prédiction (24) comportent des moyens d'estimation d'un critère de fiabilité des fonctions de modélisation des utilisateurs (22) en fonction d'une fréquence de modification des valeurs de ces fonctions par les utilisateurs (22) correspondants.

6. Système (10) de gestion de ressources selon l'une quelconque des revendications 1 à 6, dans lequel les moyens d'optimisation (32) comportent des moyens (34) de génération automatique de commandes d'achat et/ou de remplacement des ressources.

7. Système (10) de gestion de ressources selon l'une quelconque des revendications 1 à 6, comportant des moyens (36) de déclenchement d'une alerte en cas de conflit sur l'utilisation d'une ressource.

8. Procédé de gestion de ressources dans un environnement (12) délimité comportant la modélisation de la présence, de la disponibilité et/ou de l'utilisation de ces ressources dans l'environnement (12) sous forme de fonctions d'une variable temporelle, **caractérisé en ce qu'**il comporte en outre les étapes suivantes :
- on modélise (140) la présence et/ou la disponibilité d'utilisateurs (22) des ressources sous forme de fonctions d'une variable temporelle,
- on fournit (140, 150) à des moyens de prédiction (24) les valeurs passées des fonctions de modélisation des ressources et les valeurs des fonctions de modélisation des utilisateurs (22) pour obtenir en sortie des valeurs prédites des fonctions de modélisation des ressources, et
- on optimise (170) la gestion des ressources en fonction des valeurs prédites fournies par les moyens de prédiction (24).

9. Procédé de gestion de ressources selon la revendication 8, dans lequel, lors de l'étape d'optimisation (170), on calcule des instants de renouvellement des ressources, notamment en fonction de contraintes prédéfinies.

10. Module logiciel de gestion de ressources dans un environnement délimité (12), comportant des instructions logicielles pour modéliser la présence, la disponibilité et/ou l'utilisation de ces ressources dans l'environnement (12) sous forme de fonctions d'une variable temporelle, **caractérisé en ce qu'**il comporte en outre des instructions logicielles pour :
- modéliser la présence et/ou la disponibilité d'utilisateurs (22) des ressources sous forme de fonctions d'une variable temporelle,
- fournir à des moyens de prédiction (24) les valeurs passées des fonctions de modélisation des ressources et les valeurs des fonctions de modélisation des utilisateurs (22) pour obtenir en sortie des valeurs prédites des fonctions de modélisation des ressources, et
- optimiser la gestion des ressources en fonction des valeurs prédites fournies par les moyens de prédiction (24).
